# EUROPEAN PATENT APPLICATION

(11) **EP 3 598 277 A2**
(43) Date of publication of application: **22.01.2020**
(21) Application number: 19165886.3
(22) Date of filing: 28.03.2019
(51) Int. Cl.: G06F 3/041, G06F 3/0488

(54) **ELECTRONIC WHITEBOARD, ELECTRONIC WHITEBOARD SYSTEM AND CONTROL METHOD THEREOF**

(30) Priority: 29.05.2018 CN 201810530632; 30.01.2019 CN 201910092344
(71) Applicant: Coretronic Corporation, Hsin-Chu 300 (TW)
(72) Inventor: YIN, NAN-JIUN, 300 Hsin-Chu (TW); KUO, PEN-NING, 300 Hsin-Chu (TW)
(74) Representative: Ter Meer Steinmeister & Partner

(57) **Abstract**

An electronic whiteboard, an electronic whiteboard system, and a control method thereof are provided. The electronic whiteboard includes a plurality of color selecting regions and a track input region. The color selecting regions respectively correspond to a plurality of track colors. Each color selecting region serves to receive a first touch operation and generates a color setting signal according to the first touch operation. The track input region receives a second touch operation and generates a touch point reporting signal according to the second touch operation. The touch point reporting signal serves to construct a writing track, and the color setting signal serves to set a color of the writing track. The electronic apparatus generates an output file according to the writing track and displays file contents of the output file in the set color on the display panel according to the color setting signal.

## Description

This application claims the priority of China applications serial no. 201810530632.7, filed on May 29, 2018 and serial no. 201910092344.2, filed on January 30, 2019.

### BACKGROUND OF THE INVENTION

### 1. Field of the Invention

The invention relates to, an electronic whiteboard, an electronic whiteboard system and a control method thereof, and particularly relates to an electronic whiteboard, an electronic whiteboard system, and a control method thereof capable of recording a touch track.

### 2. Description of Related Art

With the advancement of electronic technologies, electronic devices have become indispensable in our daily lives. Some tools in our daily lives are gradually replaced by electronic products. For example, traditional whiteboards are replaced by electronic whiteboards. In the contemporary technical field, electronic whiteboards serve to record various operations carried out by the user during a presentation for further reference. However, how to optimize the function of the electronic whiteboards nowadays has become an issue for persons skilled in the art.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention was acknowledged by a person of ordinary skill in the art.

### SUMMARY OF THE INVENTION

Some embodiments of the invention provide an electronic whiteboard system and a control method thereof capable of generating a writing track, and converting the writing track into an output file.

Some embodiments of the invention provide an electronic whiteboard, an electronic whiteboard system, and a control method thereof capable of setting color information corresponding to a writing track.

Other objects and advantages of the invention can be further illustrated by the technical features broadly embodied and described as follows.

The object is solved by the features of the independent claims. Preferred embodiments are given in the dependent claims.

In order to achieve one or a portion of or all of the objects or other objects, an electronic whiteboard according to an embodiment of the invention is coupled to an electronic apparatus having a display panel. The electronic whiteboard includes a plurality of color selecting regions and a track input region. The color selecting regions respectively correspond to a plurality of track colors. Each of the color selecting regions serves to receive a first touch operation and generates a color setting signal according to the first touch operation. The track input region serves to receive a second touch operation and generates a touch point reporting signal according to the second touch operation. The touch point reporting signal serves to construct at least one writing track. The color setting signal serves to set a color of the at least one writing track. The electronic apparatus receives the color setting signal and the touch point reporting signal, generates at least one output file according to the at least one writing track, and displays file contents of the at least one output file in the set color on the display panel according to the color setting signal.

In some embodiments the electronic whiteboard may transmit the color setting signal and the touch point reporting signal to the electronic apparatus via a communication interface.

In some embodiments each of the plurality of color selecting regions may detect whether the each of the plurality of color selecting regions is touched or not, so as to generate color type information of the color setting signal according to respective corresponding one of the respective plurality of track colors.

In some embodiments each of the plurality of color selecting regions may detect a number of times of being touched within a preset time interval, or detects a lasting time of being touched, so as to generate brightness information or chrominance information of the color setting signal.

In some embodiments the first touch operation occurs before the second touch operation, and each of the plurality of color selecting regions receives the first touch operation to set the color of the at least one writing track displayed on the display panel in correspondence with the second touch operation subsequently received in the track input region.

In order to achieve one or a portion of or all of the objects or other objects, an electronic whiteboard system according to an embodiment of the invention includes at least one electronic whiteboard and an electronic apparatus. The at least one electronic whiteboard includes a plurality of color selecting regions and a track input region. The color selecting regions respectively correspond to a plurality of track colors. Each of the color selecting regions serves to receive a first touch operation and generates a color setting signal according to the first touch operation. The track input region serves to receive a second touch operation and generates a touch point reporting signal according to the second touch operation. The electronic apparatus has a display panel. The electronic apparatus is coupled to the at least one electronic whiteboard, and serves to receive the color setting signal and the touch point reporting signal. The electronic apparatus analyzes the touch point reporting signal based on time information to obtain at least one writing track, sets a color of the at least one writing track according to the color setting signal, generates at least one output file according to the at least one writing track, and displays file contents of the at least one output file in the set color on the display panel according to the color setting signal.

In some embodiments the electronic whiteboard system may further comprise a communication interface

Preferably, the at least one electronic whiteboard may transmit the color setting signal and the touch point reporting signal to the electronic apparatus through the communication interface.

In some embodiments the electronic apparatus may generate color type information of the color setting signal according to respective corresponding one of the plurality of track colors based on whether each of the plurality of color selecting regions is touched.

In some embodiments the electronic apparatus may generate brightness information or chrominance information of the color setting signal according to a number of times which each of the plurality of color selecting regions is touched within a preset time interval or according to a lasting time in which each of the plurality of color selecting regions is touched.

In some embodiments the first touch operation occurs before the second touch operation, and each of the plurality of color selecting regions receives the first touch operation to set the color of the at least one writing track displayed on the display panel in correspondence with the second touch operation subsequently received in the track input region.

In order to achieve one or a portion of or all of the objects or other objects, a control method of an electronic whiteboard according to an embodiment of the invention includes: providing at least one electronic whiteboard; providing a plurality of color selecting regions respectively corresponding to a plurality of track colors on the electronic whiteboard, receiving a first touch operation by each of the color selecting regions, and generating a color setting signal according to the first touch operation; providing a track input region on the at least one electronic whiteboard, receiving a second touch operation by the track input region, and generating a touch point reporting signal according to the second touch operation; and providing an electronic apparatus having a display panel, receiving the color setting signal and the touch point reporting signal by the electronic apparatus, analyzing the touch point reporting signal based on time information to obtain at least one writing track, setting a color of the at least one writing track according to the color setting signal, generating at least one output file according to the at least one writing track, and displaying file contents of the at least one output file in the set color on the display panel according to the color setting signal.

Preferably, the method may further comprise: generating color type information of the color setting signal according to respective corresponding one of the plurality of track colors based on whether each of the plurality of color selecting regions is touched.

In some embodiments, the method further comprises: generating brightness information or chrominance information of the color setting signal according to a number of times which each of the plurality of color selecting regions is touched within a preset time interval or according to a lasting time in which each of the plurality of color selecting regions is touched.

Preferably, the first touch operation occurs before the second touch operation, and each of the plurality of color selecting regions receives the first touch operation to set the color of the at least one writing track displayed on the display panel in correspondence with the second touch operation subsequently received in the track input region.

In order to achieve one or a portion of or all of the objects or other objects, an electronic whiteboard system according to an embodiment of the invention includes at least one electronic whiteboard and an electronic apparatus. The at least one electronic whiteboard detects a touch operation carried out by a touch medium through a touch detection operation, and generates a touch point reporting signal according to the touch operation. The electronic apparatus is coupled to the at least one electronic whiteboard, receives the touch point reporting signal, and analyzes the touch point reporting signal based on time information to obtain at least one writing track. The electronic apparatus generates at least one output file according to the at least one writing track.

In some embodiments, the electronic apparatus may further analyze the at least one writing track based on the time information to obtain at least one text information.

In some embodiments, the at least one electronic whiteboard may comprise a plurality of function selecting regions and may generate text feature information corresponding to the at least one text information according to a touched state of each of the plurality of function selecting regions.

Preferably, the electronic apparatus may generate the at least one output file according to the at least one text information and the corresponding text feature information.

In some embodiments, the electronic whiteboard may further provide a file name region, the at least one electronic whiteboard detects the touch operation in the file name region to generate a file name touch point reporting signal.

In some embodiments, the electronic apparatus may receive and analyze the file name touch point reporting signal to generate a file name of the at least one output file.

In some embodiments, the plurality of function selecting regions comprise at least one text feature selecting region.

Preferably, the at least one electronic whiteboard may detect the touch operation in the at least one text feature selecting region to generate a feature touch point reporting signal.

Preferably, the electronic apparatus may generate the text feature information according to the feature touch point reporting signal.

Preferably, the at least one text feature selecting region may comprises at least one of a track color selecting region, a text size selecting region, and a text font selecting region.

Preferably, the plurality of function selecting regions may comprise a plurality of electronic apparatus control regions.

Preferably, the at least one electronic whiteboard may detect the touch operation in each of the electronic apparatus control regions to generate a control command, the electronic apparatus receives the control commands and carries out a plurality of functions respectively corresponding to the electronic apparatus control regions according to the control commands.

Preferably, the electronic apparatus may be coupled to the at least one electronic whiteboard via a wired or wireless communication interface.

Preferably, the electronic apparatus may be further coupled to at least one remote electronic apparatus, and the electronic apparatus transmits the at least one output file to the at least one remote electronic apparatus.

Preferably, the electronic apparatus may be coupled to the at least one remote electronic apparatus via a wired or wireless communication interface.

Preferably, the electronic apparatus may be mounted on the at least one electronic whiteboard, a power supply is disposed on the electronic apparatus, and the power supply supplies operating power to the electronic apparatus and the at least one electronic whiteboard.

Preferably, the electronic apparatus may comprise a display panel.

Preferably, the display panel may display file contents of the at least one output file.

Preferably, the electronic whiteboard system may further comprise a magnetic substance.

Preferably, the magnetic substance may be disposed on the at least one electronic whiteboard.

Preferably, the at least one electronic whiteboard may be attached to a base board through the magnetic substance.

In order to achieve one or a portion of or all of the objects or other objects, a control method of an electronic whiteboard according to an embodiment of the invention includes: providing at least one electronic whiteboard to detect a touch operation carried out by a touch medium through a touch detection operation, and generating a touch point reporting signal according to the touch operation; and providing an electronic apparatus to receive the touch point reporting signal, analyzing the touch point reporting signal based on time information to obtain at least one writing track, and generating at least one output file by the electronic apparatus according to the at least one writing track.

In some embodiments the method further comprises: providing the electronic apparatus to analyze the at least one writing track based on the time information, so as to obtain at least one text information.

In some embodiments the method further comprises: providing a plurality of function selecting regions on the at least one electronic whiteboard, and generating text feature information corresponding to the at least one text information according to a touched state of each of the plurality of function selecting regions; and generating the at least one output file by the electronic apparatus according to the at least one text information and the corresponding text feature information.

In some embodiments the providing the plurality of function selecting regions on the at least one electronic whiteboard comprises: providing a file name region on the at least one electronic whiteboard, and detecting the touch operation in the file name region to generate a file name touch point reporting signal; and analyzing the file name touch point reporting signal by the electronic apparatus to generate a file name of the at least one output file.

In some embodiments providing the plurality of function selecting regions on the at least one electronic whiteboard comprises: providing at least one text feature selecting region on the at least one electronic whiteboard, and detecting the touch operation in the at least one text feature selecting region to generate a feature touch point reporting signal; and generating the text feature information by the electronic apparatus according to the feature touch point reporting signal.

In some embodiments the at least one text feature selecting region may comprise at least one of a track color selecting region, a text size selecting region, and a text font selecting region.

In some embodiments providing the plurality of function selecting regions on the at least one electronic whiteboard comprises: providing a plurality of electronic apparatus control regions on the at least one electronic whiteboard, and detecting the touch operation in each of the electronic apparatus control regions to generate a control command; and receiving the control commands by the electronic apparatus and carrying out a plurality of functions respectively corresponding to the electronic apparatus control regions according to the control commands.

Based on the above, the electronic whiteboard according to one or some embodiments of the invention has the track input region and the color selecting regions. The track input region receives the touch operation to generate the writing track, and the color selecting region receives the touch operation to generate the color setting signal. The electronic whiteboard sets one or more color information of the writing track subsequently generated according to the color setting signal, and displays the writing track on the display panel of the electronic apparatus according to the corresponding color information.

Other objectives, features and advantages of the invention will be further understood from the further technological features disclosed by the embodiments of the invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic diagram illustrating an electronic whiteboard according to an embodiment of the invention.
FIG. 2 is a schematic view illustrating contents of an output file according to an embodiment of the invention.
FIG. 3 is a schematic diagram illustrating an electronic whiteboard system according to an embodiment of the invention.
FIGs. 4A to 4C are schematic views illustrating different examples of an electronic whiteboard system according to an embodiment of the invention.
FIG. 5 is a schematic diagram illustrating an electronic whiteboard system according to another embodiment of the invention.
FIG. 6 is a flowchart illustrating a control method of an electronic whiteboard according to an embodiment of the invention.
FIG. 7 is a flowchart illustrating a control method of an electronic whiteboard according to another embodiment of the invention.

### DESCRIPTION OF THE EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

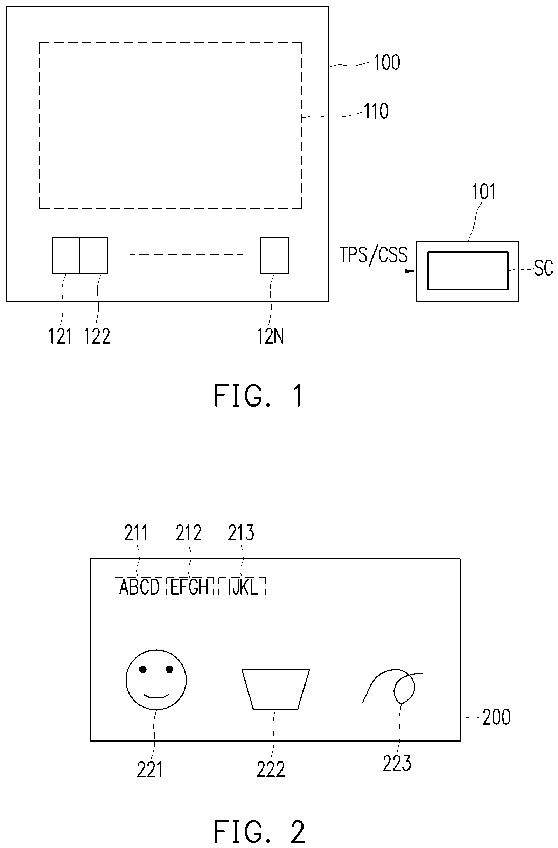

Referring to FIG. 1, FIG. 1 is a schematic diagram illustrating an electronic whiteboard according to an embodiment of the invention. An electronic whiteboard 100 may be coupled to an electronic apparatus 101. The electronic apparatus 101 may have a display panel SC. The electronic whiteboard 100 has a track input region 110 and a plurality of color selecting regions 121 to 12N. The track input region 110 serves to receive a touch operation and generate a touch point reporting signal TPS according to the touch operation. Each of the color selecting regions 121 to 12N serves to receive another touch operation and generate a color setting signal CSS. The color selecting regions 121 to 12N respectively correspond to different track colors. The corresponding relationship may be defined by the designer in advance or defined by the user. There is no specific limitation in this regard.

The touch point reporting signal TPS and the color setting signal CSS may be transmitted to the electronic apparatus 101. The electronic apparatus 101 may construct one or more writing tracks according to the touch point reporting signal TPS, and the electronic apparatus 101 may set a track color of the writing track according to the color setting signal CSS. Besides, the electronic apparatus 101 may generate one or more output files according to the constructed writing track and display contents of the file on the display panel SC. In addition, the color rendered in one or more writing tracks in the contents of the file may be generated according to the color setting signal CSS.

Specifically, firstly, one of the color selecting regions 121 to 12N receives a first touch operation, generates the color setting signal CSS according to the first touch operation, and transmits the color setting signal CSS to the electronic apparatus 101. Then, the track input region 110 receives a second touch operation, generates the touch point reporting signal TPS according to the second touch operation, and transmits the touch point reporting signal TPS to the electronic apparatus 101. Meanwhile, the electronic apparatus 101 firstly receives the color setting signal CSS and then receives the touch point reporting signal TPS. The electronic apparatus 101 may obtain the set track color according to the color setting signal CSS. The electronic apparatus 101 may generate one or more writing tracks by analyzing the touch point reporting signal TPS. The electronic apparatus 101 may set the color of the one or more writing tracks according to the set track color.

The electronic apparatus 101 may store information relating to the obtained one or more writing tracks and the color corresponding to the one or more writing tracks in an output file. The electronic apparatus 101 may also display the contents of the output file through the display panel SC and display the respective tracks according to the color corresponding to each of the writing tracks.

In an embodiment of the invention, the touch point reporting signal TPS reflects information (e.g., coordinate positions) relating to a plurality of touch points generated according to temporal sequence information. The electronic apparatus 101 may construct one or more writing tracks according to the coordinate positions of the touch points and the temporal sequence according to which the touch points occur.

Besides, each of the color selecting regions 121 to 12N may generate the color setting signal CSS according to whether or not a touched phenomenon occurs. When the touched phenomenon occurs in one of the color selecting regions 121 to 12N, the color selecting region that is touched (e.g., the color selecting region 121) generates the color setting signal CSS according to the corresponding track color, and transmits the color setting signal CSS to the electronic apparatus 101. For example, if the track color corresponding to the color selecting region 121 is red, the electronic apparatus 101 may set color type information of a writing track generated subsequently as red. Afterwards, if a new touched phenomenon occurs in the color selecting region 122, for example, the color selecting region 122 generates the color setting signal CSS according to the corresponding track color (e.g., green), and transmits the color setting signal CSS to the electronic apparatus 101. The electronic apparatus 101 may change the color type information of a writing track generated subsequently to green.

Besides, each of the color selecting regions 121 to 12N may also detect the number of times of being touched within a preset time interval, or detect a lasting time of being touched, so as to generate brightness information or chrominance information of the color setting signal CSS. For example, if each of the color selecting regions 121 to 12N detects a state of being touched for multiple times successively, the brightness (or chrominance) rendered in the corresponding writing track may be adjusted according to the number of times which the each of the color selecting regions 121 to 12N is touched. If the touch operation detected by each of the color selecting regions 121 to 12N remains without being interrupted, each of the color selecting regions 121 to 12N may detect the lasting time in which the each of the color selecting regions 121 to 12N is touched, thereby adjusting the brightness (or chrominance) rendered in the corresponding writing track.

In the above embodiment, the brightness of the writing track may be positively or negatively proportional to the number of times of being touched or the lasting time. The chrominance of the writing track may also be positively or negatively proportional to the number of times of being touched or the lasting time.

It should be noted that the electronic whiteboard 100 and the electronic apparatus 101 may communicate with each other via a communication interface. The electronic whiteboard 100 may transmit the color setting signal CSS and the touch point reporting signal TPS to the electronic apparatus 101 via the communication interface. The communication interface may be a wired or wireless communication interface. Any wired or wireless communication interface that people having ordinary skills in the art are familiar with is applicable to the embodiments of the invention, and there is no specific limitation in this regard.

Meanwhile, the electronic apparatus 101 may further analyze the writing track and convert the writing track into text information through a writing-text converting operation, and store text information and the corresponding track color, brightness information, and chrominance information in the output file.

In the embodiment, the electronic apparatus 101 may be an arbitrary portable or static electronic apparatus, such as a smartphone, a desktop computer, a notebook computer, a tablet computer, etc.

Referring to FIG. 2, FIG. 2 is a schematic view illustrating contents of an output file according to an embodiment of the invention. An output file 200 includes writing tracks 211 to 213 and 221 to 223. The writing tracks 211 to 213 are writing tracks of text, and the writing tracks 221 to 223 are writing tracks of graphs. In an example in which the writing tracks 211 to 213 and 221 to 223 are successively generated, if the color type information of the color setting signal transmitted by the electronic whiteboard before the writing tracks 211 to 213 are generated is blue, the writing tracks 211 to 213 displayed on the display panel of the electronic apparatus are blue. If the color type information of the color setting signal transmitted by the electronic whiteboard after the writing tracks 211 to 213 are generated and before the writing tracks 221 to 223 are generated is green, the writing tracks 221 to 223 displayed on the display panel of the electronic apparatus is green.

In an embodiment of the invention, the output file may include only the writing tracks of text, only the writing tracks of graphs, or the writing tracks of text and graphs. There is no specific limitation in this regard.

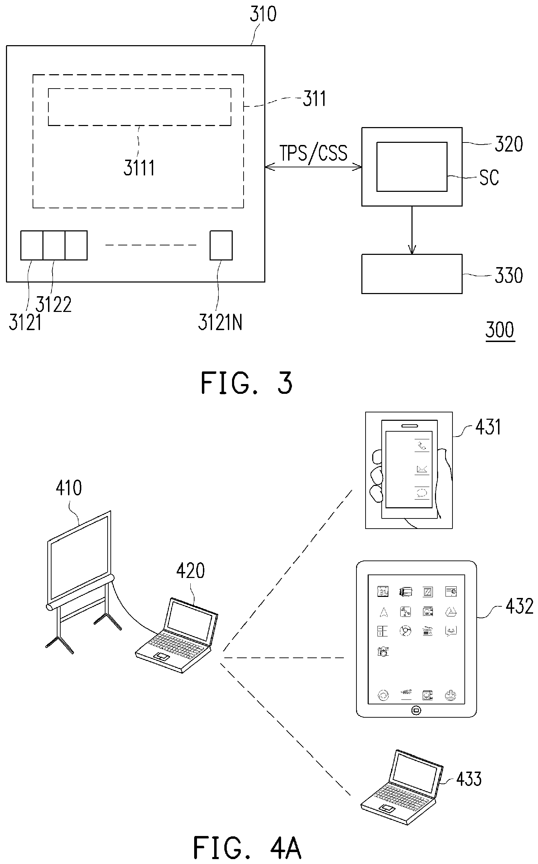

Referring to FIG. 3, FIG. 3 is a schematic diagram illustrating an electronic whiteboard system according to an embodiment of the invention. An electronic whiteboard system 300 includes an electronic whiteboard 310 and an electronic apparatus 320. The electronic whiteboard 310 has a touch panel with a touch function. The electronic whiteboard 310 detects a touch operation carried out by a touch medium on the electronic whiteboard 310 through a touch detection operation, and generates the touch point reporting signal TPS according to the detected touch operation. In the embodiment, the electronic whiteboard 310 may establish a coordinate system for a touch region provided by the electronic whiteboard 310. In addition, when a touch phenomenon occurs on the electronic whiteboard 310, the electronic whiteboard 310 is able to detect the coordinate values of the positions at which the touch occurs at different time points, and generate the touch point reporting signal TPS accordingly. In the embodiment, the electronic whiteboard 110 may detect the touch operation through capacitance touch detecting, electromagnetic touch detecting, resistance touch detecting, or other touch detection operations that people having ordinary skills in the art are familiar with. In the embodiment, a processor may be further disposed in the electronic whiteboard 310, and the touch point reporting signal TPS is generated by the processor according to the touch operation.

The touch medium may be constructed in correspondence with the touch detecting method of the electronic whiteboard 310. Taking capacitive touch detecting as an example, the touch medium may be a water-based pen having an electrical conductive capability. However, the invention is not limited thereto.

The electronic apparatus 320 is coupled to the electronic whiteboard 310. The electronic apparatus 320 has the display panel SC. The electronic apparatus 320 serves to receive the touch point reporting signal TPS and the color setting signal CSS transmitted by the electronic whiteboard 310. The electronic apparatus 320 may analyze the touch point reporting signal TPS based on time information to obtain one or more writing tracks. For example, the electronic apparatus 320 determines that the coordinates of the touch point occurring at a time point t1 is (x1, y1), the coordinates of the touch point occurring at a time point t2 is (x2, y2), and the coordinates of the touch point occurring at a time point t3 is (x3, y3), wherein the time point t1 is earlier than the time point t2, and the time point t2 is earlier than the time point t3. In this way, by analyzing the position relation among the multiple touch points that successively occur in the touch point reporting signal TPS, the electronic apparatus 120 may obtain the strokes and the order of the user's writing based on the touch point reporting signal TPS transmitted by the electronic whiteboard 310. The electronic apparatus 320 may record the obtained writing tracks by generating an output file 330. In an embodiment, the writing tracks of graphs are recorded with the output file 330 in a graphic format, for example. However, the invention is not limited thereto. In the embodiment, the output file 330 may be displayed on the display panel SC of the electronic apparatus 320. The electronic apparatus 320 may be an arbitrary portable or static electronic apparatus, such as a smartphone, a desktop computer, a notebook computer, a tablet computer, etc.

In the embodiment, the electronic whiteboard 310 provides a track input region 311 and function selecting regions 3121 to 312N. The electronic whiteboard 310 generates the touch point reporting signal TPS according to the touched state on the writing region 311. When the touch point reporting signal TPS is transmitted to the electronic apparatus 320, the electronic apparatus 320 may generate one or more writing tracks according to the touch point reporting signal TPS at this time. In the embodiment, the electronic apparatus 320 learns the order of strokes edited by the user on the electronic whiteboard 310 by analyzing the touch point reporting signal TPS, and generates the writing tracks having one or more writings, written text, or sketches accordingly. Besides, the electronic apparatus 320 also keeps records according to the time information with the temporal sequence in which the writing tracks occur. In this way, in the embodiment, the electronic apparatus 320 is able to faithfully present/record the writings/writing tracks written by the user on the electronic whiteboard 310 on/in the electronic apparatus 320.

In an embodiment, the electronic apparatus 320 may obtain the user's writing according to the touch point reporting signal TPS, and perform a writing-text conversion operation on the obtained writing, so as to obtain one or more text information. In an embodiment, the method for the electronic apparatus 320 to analyze the touch point reporting signal TPS to generate the text information may follow the writing-text conversion method known by people having ordinary skills in the art, and there is no specific limitation in this regard. Besides, the function selecting regions 3121 to 312N on the electronic whiteboard 310 may include allowing the user to select a text feature. In addition, the electronic whiteboard 310 may generate corresponding text feature information according to the touched state of the function selecting regions 3121 to 312N, and transmit the generated text feature information to the electronic apparatus 320. Specifically, based on the time information, the electronic apparatus 320 may keep records according to the text information and the time at which the text feature information is generated, and find the text information corresponding to the text feature information. For example, the text feature information includes the size, color, font, or style (e.g., italic or regular, boldface font or thin font), etc., of the text. At a time point T1, the electronic apparatus 320 receives the text feature information which sets the thickness of the strokes of the text to be boldfaced. The electronic apparatus 320 thus sets all the text included in the text information generated after the time point T1 to be boldfaced. When receiving the text feature information setting the style of the text to be italic at a subsequent time point T2, the electronic apparatus 320 sets the style of the text included in the text information generated after the time point T2 to be italic. Therefore, when the text written on the electronic whiteboard 310 has first text feature information (e.g., large-sized, red, Times Roman font, boldfaced), the electronic apparatus 320 may synchronously generate text corresponding to the first text feature information, so as to generate the corresponding output file 330. Similarly, when the text written on the electronic whiteboard 310 has second text feature information (e.g., smallsized, blue, BiauKai font, boldfaced), the electronic apparatus 320 may synchronously generate text corresponding to the second text feature information, so as to generate the corresponding output file 330.

Besides, the function selecting regions 3121 to 312N on the electronic whiteboard 310 may also include the color selecting regions respectively corresponding to different track colors. When each of the color selecting regions detects a touched state, the electronic whiteboard 310 may generate the color setting signal CSS and transmit the color setting signal CSS to the electronic apparatus 320. The electronic apparatus 320 may set the color type of the corresponding writing track according to the color setting signal CSS, and may further set the brightness information and the chrominance information of the corresponding writing track according to the color setting signal CSS.

Details regarding the color selecting regions and the color setting signal CSS have been described in detail in the above embodiment and therefore will not be repeated in the following.

Meanwhile, in the embodiment, a file name region 3111 may be set in the track input region 311. The electronic whiteboard 310 may detect a touch operation in the file name region 3111 to generate a file name touch point reporting signal. The electronic apparatus 320 may analyze the file name touch point reporting signal to generate the file name of the output file 330. In the embodiment, the file name region 3111 is located at the upper part of the electronic whiteboard 310, for example. However, the invention is not limited thereto. In other embodiments, the file name region 3111 may also be located at the lower part, the left side, the right side, the middle, or other suitable positions of the electronic whiteboard 310 based on the design needs.

In other embodiments, the function selecting regions 3121 to 312N may further include a plurality of electronic apparatus control regions. The electronic whiteboard 310 may detect the touch operation in the electronic apparatus control region to generate a control command, and the electronic apparatus 320 may carry out the corresponding function according to the control command. For example, the electronic apparatus control region may include saving a file and a control function for a displayed frame. When the touch operation occurs in the electronic apparatus control region corresponding to saving the file, the electronic whiteboard 310 transmits the control command corresponding to saving the file, and the electronic apparatus 320 carries out an operation of saving the output file according to the received control command. When the touch operation occurs in the electronic apparatus control region corresponding to the control function for a displayed frame (such as removing or moving, etc.), the electronic apparatus 320 carries out an operation for the displayed frame to remove or move the displayed frame according to the received control command. However, the functions of the function selecting regions 3121 to 312N described above are merely examples. The functions of the function selecting regions 3121 to 312N may be set based on the design needs.

Referring to FIGs. 4A to 4C, FIGs. 4A to 4C are schematic views illustrating different examples of an electronic whiteboard system according to an embodiment of the invention. In FIG. 4A, an electronic apparatus 420 is coupled to an electronic whiteboard 410 via a wired communication interface (e.g., the universal serial bus (USB)). In the embodiment, the electronic apparatus 420 is a notebook computer, for example. However, the invention is not limited thereto. In an embodiment, the electronic apparatus 420 may also be a personal computer (PC). Still, the invention is not limited thereto, either. Besides, the electronic apparatus 420 may be additionally coupled to one or more remote electronic apparatuses 431 to 433. The electronic apparatus 420 may transmit the generated output file to the remote electronic apparatuses 431 to 433. In this way, the remote electronic apparatuses 431 to 433 are able to access the output file generated by the electronic apparatus 420, and the electronic apparatus 420 and the remote electronic apparatuses 431 to 433 are thereby able to share the output file.

In the embodiment, the remote electronic apparatuses 431, 432, and 433 are respectively a smartphone, a tablet computer, and a notebook computer. In an embodiment, the remote electronic apparatus 431 (e.g., the smartphone)/the remote electronic apparatus 432 (e.g., the tablet computer) may be installed with an operating system such as Android or iOS, etc. However, the invention is not limited thereto. In an embodiment, the remote electronic apparatus 433 (e.g., the notebook computer) may be installed with an operating system such as Windows, Chrome OS, or Mac OS, etc. However, the invention is not limited thereto. A specialized application (app) may be installed in the remote electronic apparatuses 431 to 433, and the remote electronic apparatuses 431 to 433 are coupled to the electronic apparatus 420 via a wired or wireless communication interface. In an embodiment, the wired communication interface is the Ethernet network interface, and the wireless communication interface is the Wi-Fi interface, for example. However, the invention is not limited thereto.

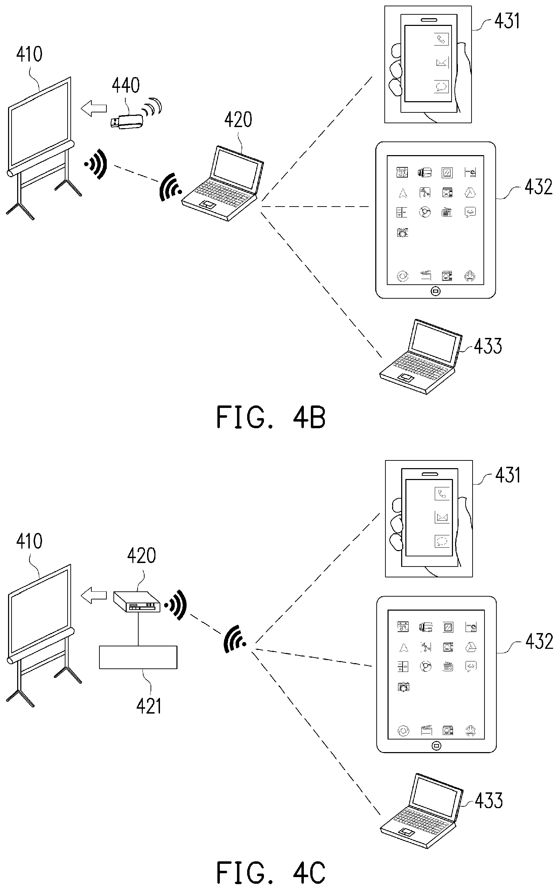

In FIG. 4B, a wireless signal transceiver 440 may be disposed or built in the electronic whiteboard 410 (i.e., the wireless signal transceiver 440 may be mounted on or built in the electronic whiteboard 410), and the electronic apparatus 420 may communicate with the electronic whiteboard 410 via a wireless communication interface. In the embodiment, the wireless signal transceiver 440 may provide a near-end or remote wireless communication interface. The electronic apparatus 420 may be further coupled to the one or more remote electronic apparatuses 431 to 433 for sharing the output file. Other implementing details in FIG. 4B are already described in the embodiment of FIG. 4A and thus will not be repeated in the following.

In FIG. 4C, the electronic apparatus 420 may be mounted on the electronic whiteboard 410. Besides, a power supply 421 is disposed on the electronic apparatus 420 and supplies operating power to the electronic apparatus 420 and the electronic whiteboard 410. In the embodiment, the electronic apparatus 420 is a mini personal computer (mini PC), for example, and the power supply 421 is a battery bank, for example. However, the invention is not limited thereto. In this way, by integrating the electronic apparatus 420 and the power supply 421 capable of supplying power at any time into the electronic whiteboard 410, the electronic whiteboard system of the embodiment becomes more portable. Besides, the electronic apparatus 420 is provided for the user's direction operation, so the electronic whiteboard 410 does not need an additional computer externally connected thereto. Thus, the electronic apparatus 420 becomes more convenient to use. Moreover, the electronic apparatus 420 may be further coupled to the one or more remote electronic apparatuses 431 to 433 for sharing the output file. Other implementing details in FIG. 4C are already described in the embodiment of FIG. 4A and thus will not be repeated in the following.

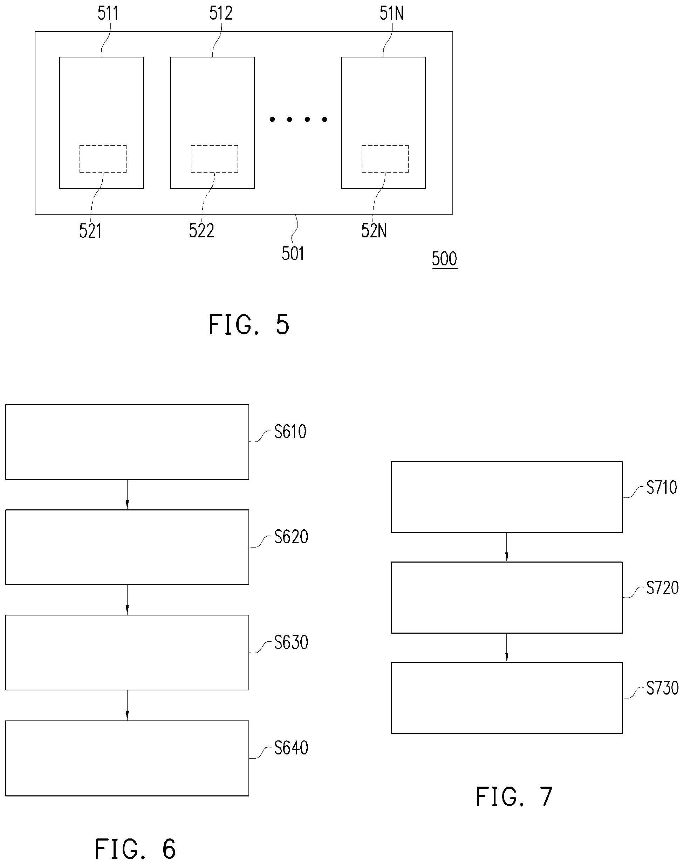

Referring to FIG. 5, FIG. 5 is a schematic diagram illustrating an electronic whiteboard system according to another embodiment of the invention. In an electronic whiteboard system 500, magnetic substances 521 to 52N are respectively disposed in electronic whiteboards 511 to 51N. With the magnetic substances 521 to 52N, the electronic whiteboards 511 to 51N can be attached to a base board 501 to be provided for multiple users to write. Thus, the electronic whiteboard system becomes more convenient to use.

Referring to FIG. 6, FIG. 6 is a flowchart illustrating a control method of an electronic whiteboard according to an embodiment of the invention. At Step S610, at least one electronic white board is provided. At Step S620, a plurality of color selecting regions respectively corresponding to a plurality of track colors are provided on the electronic whiteboard, a first touch operation is received by each of the color selecting regions, and a color setting signal is generated according to the first touch operation. At Step S630, a track input region is provided on the electronic whiteboard, a second touch operation is received by the track input region, and a touch point reporting signal is generated according to the second touch operation. At Step S640, an electronic apparatus having a display panel is provided, the color setting signal and the touch point reporting signal are received by the electronic apparatus, the touch point reporting signal is analyzed based on time information to obtain at least one writing track, a color of the at least one writing track is set according to the color setting signal, at least one output file is generated according to the at least one writing track, and file contents of the at least one output file are displayed in the set color on the display panel according to the color setting signal.

Implementing methods and details about the steps above are already explicated in the foregoing embodiments and examples and thus will not be repeated in the following.

Referring to FIG. 7, FIG. 7 is a flowchart illustrating a control method of an electronic whiteboard according to another embodiment of the invention. At Step S710, at least one electronic whiteboard is provided to detect a touch operation carried out by a touch medium through a touch detection operation, and a touch point reporting signal is generated according to the touch operation. At Step S720, an electronic apparatus is provided to receive the touch point reporting signal, and the touch point reporting signal is analyzed based on time information to obtain at least one writing track. At Step S730, at least one output file is generated by the electronic apparatus according to the at least one writing track.

Implementing methods and details about the steps above are already explicated in the foregoing embodiments and examples and thus will not be repeated in the following.

In view of the foregoing, one or more electronic whiteboards are provided in the embodiments of the invention, and the touch point reporting signal is generated by detecting the touch operation carried out by the touch medium. In the embodiments of the invention, the electronic apparatus analyzes the touch point reporting signal according to the time information to generate at least one writing track, and thereby generates one or more output files according to the at least one writing track. In the embodiments of the invention, the electronic whiteboard is provided to detect writings written by the user through the touch detection operation and convert the writings into text information. In the embodiments of the invention, the color selecting regions are provided, and the color of the writing track is set by detecting the touch operation in the color selecting region. Besides, in the embodiments of the invention, the electronic whiteboard receives the text feature information corresponding to the text information and input by the user, and the electronic apparatus generates the output file according to the text information and the corresponding text feature information. In this way, the electronic whiteboard system according to the embodiments of the invention offers a more efficient human-machine interface and significantly facilitates the performance of the electronic whiteboard system.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the invention as defined by the following claims. Moreover, no element and component in the disclosure is intended to be dedicated to the public regardless of whether the element or component is explicitly recited in the following claims.

## Claims

**1.** An electronic whiteboard (100), coupled to an electronic apparatus (101) having a display panel (SC), the electronic whiteboard (100) comprises a plurality of color selecting regions (121-12N) and a track input region (110), wherein:
the plurality of color selecting regions (121-12N) respectively correspond to a plurality of track colors, each of the plurality of color selecting regions (121-12N) is provided to receive a first touch operation and to generate a color setting signal (CSS) according to the first touch operation, and
the track input region (110) is provided to receive a second touch operation and to generate a touch point reporting signal (TPS) according to the second touch operation,
wherein the touch point reporting signal (TPS) serves to construct at least one writing track, the color setting signal (CSS) serves to set a color of the at least one writing track,
wherein the electronic whiteboard (100) is configured to transmit the color setting signal (CSS) and the touch point reporting signal (TPS) to the electronic apparatus (101) for causing the electronic apparatus (101) to generate at least one output file according to the at least one writing track, and to display file contents of the at least one output file in the set color on the display panel (SC) according to the color setting signal (CSS).

**2.** The electronic whiteboard as claimed in claim 1, wherein the electronic whiteboard (100) is configured to transmit the color setting signal (CSS) and the touch point reporting signal (TPS) to the electronic apparatus (101) via a communication interface.

**3.** The electronic whiteboard as claimed in claim 1 or 2, wherein the electronic whiteboard (100) is configured to detect whether the each of the plurality of color selecting regions (121-12N) is touched or not, so as to generate color type information of the color setting signal (CSS) according to respective corresponding one of the respective plurality of track colors.

**4.** The electronic whiteboard as claimed in claim 1, 2 or 3, wherein the electronic whiteboard (100) is configured to detect a number of times of each of the plurality of color selecting regions (121-12N) of being touched within a preset time interval, or to detect a lasting time of being touched, so as to generate brightness information or chrominance information of the color setting signal (CSS).

**5.** The electronic whiteboard as claimed in any one of the preceding claims, wherein the first touch operation occurs before the second touch operation, and each of the plurality of color selecting regions (121-12N) is configured to receive the first touch operation to set the color of the at least one writing track displayed on the display panel (SC) in correspondence with the second touch operation subsequently received in the track input region (110).

**6.** An electronic whiteboard system, comprising at least one electronic whiteboard (100) as claimed in any one of the preceding claims and an electronic apparatus (101) having a display panel (SC), wherein:
the electronic apparatus (101) is coupled to the at least one electronic whiteboard (100), and is provided to receive the color setting signal (CSS) and the touch point reporting signal (TPS), to analyze the touch point reporting signal (TPS) based on time information to obtain at least one writing track, to set a color of the at least one writing track according to the color setting signal (CSS), to generate at least one output file according to the at least one writing track, and to display file contents of the at least one output file in the set color on the display panel (SC) according to the color setting signal (CSS).

**7.** The electronic whiteboard system as claimed in claim 6, wherein the electronic apparatus (101) is configured to generate color type information of the color setting signal (CSS) according to respective corresponding one of the plurality of track colors based on whether each of the plurality of color selecting regions (121-12N) is touched and/or
the electronic apparatus (101) is configured to generate brightness information or chrominance information of the color setting signal (CSS) according to a number of times which each of the plurality of color selecting regions (121-12N) is touched within a preset time interval or according to a lasting time in which each of the plurality of color selecting regions (121-12N) is touched.

**8.** A control method of an electronic whiteboard, comprising:
providing at least one electronic whiteboard (101);
providing a plurality of color selecting regions (121-12N) respectively corresponding to a plurality of track colors on the electronic whiteboard (100), receiving a first touch operation by each of the plurality of color selecting regions (121-12N), and generating a color setting signal (CSS) according to the first touch operation;
providing a track input region (110) on the at least one electronic whiteboard (100), receiving a second touch operation by the track input region (110), and generating a touch point reporting signal (TPS) according to the second touch operation; and
providing an electronic apparatus (101) having a display panel (SC), receiving the color setting signal (CSS) and the touch point reporting signal (TPS) by the electronic apparatus (101), analyzing the touch point reporting signal (TPS) based on time information to obtain at least one writing track, setting a color of the at least one writing track according to the color setting signal (CSS), generating at least one output file according to the at least one writing track, and displaying file contents of the at least one output file in the set color on the display panel (SC) according to the color setting signal (CSS).

**9.** The control method of the electronic whiteboard as claimed in claim 8, further comprising:
generating color type information of the color setting signal (CSS) according to respective corresponding one of the plurality of track colors based on whether each of the plurality of color selecting regions (121-12N) is touched; and/or,
further comprising:
generating brightness information or chrominance information of the color setting signal (CSS) according to a number of times which each of the plurality of color selecting regions (121-12N) is touched within a preset time interval or according to a lasting time in which each of the plurality of color selecting regions (121-12N) is touched.

**10.** The control method of the electronic whiteboard as claimed in claim 8 or 9, wherein the first touch operation occurs before the second touch operation, and each of the plurality of color selecting regions (121-12N) receives the first touch operation to set the color of the at least one writing track displayed on the display panel (SC) in correspondence with the second touch operation subsequently received in the track input region (110).

**11.** An electronic whiteboard system, comprising at least one electronic whiteboard (310) and an electronic apparatus (320), wherein:
the at least one electronic whiteboard (310) is configured to detect a touch operation carried out by a touch medium through a touch detection operation, and to generate a touch point reporting signal (TPS) according to the touch operation, and
the electronic apparatus (320) is coupled to the at least one electronic whiteboard (310), is configured to receive the touch point reporting signal (TPS), to analyze the touch point reporting signal (TPS) based on time information to obtain at least one writing track, and to generate at least one output file according to the at least one writing track.

**12.** The electronic whiteboard system as claimed in claim 11, wherein the electronic apparatus (320) is further configured to analyze the at least one writing track based on the time information to obtain at least one text information.

**13.** The electronic whiteboard system as claimed in claim 12, wherein the at least one electronic whiteboard (310) comprises a plurality of function selecting regions (3121-312N) and is configured to generate text feature information corresponding to the at least one text information according to a touched state of each of the plurality of function selecting regions (3121-312N), wherein the electronic apparatus (320) is configured to generate the at least one output file according to the at least one text information and the corresponding text feature information.

**14.** The electronic whiteboard system as claimed in claim 13, wherein the electronic whiteboard further provides a file name region (3111), the at least one electronic whiteboard (310) is configured to detect the touch operation in the file name region (3111) to generate a file name touch point reporting signal, and the electronic apparatus (320) is configured to receive and to analyze the file name touch point reporting signal to generate a file name of the at least one output file.

**14.** The electronic whiteboard system as claimed in claim 13, wherein the plurality of function selecting regions (3121-312N) comprise at least one text feature selecting region, the at least one electronic whiteboard (310) is configured to detect the touch operation in the at least one text feature selecting region to generate a feature touch point reporting signal, and the electronic apparatus (320) is configured to generate the text feature information according to the feature touch point reporting signal.

**15.** The electronic whiteboard system as claimed in claim 14, wherein the at least one text feature selecting region comprises at least one of a track color selecting region, a text size selecting region, and a text font selecting region.

**16.** The electronic whiteboard system as claimed in claim 13, wherein the plurality of function selecting regions (3121-312N) comprise a plurality of electronic apparatus control regions, the at least one electronic whiteboard (310) is configured to detect the touch operation in each of the electronic apparatus control regions to generate a control command, the electronic apparatus (320) is configured to receive the control commands and to carry out a plurality of functions respectively corresponding to the electronic apparatus control regions according to the control commands.

**17.** The electronic whiteboard system as claimed in any one of claims 11 to 16, wherein the electronic apparatus (320) is coupled to the at least one electronic whiteboard (310) via a wired or wireless communication interface and/or the electronic apparatus (420) is further coupled to at least one remote electronic apparatus (431, 432, 433), and the electronic apparatus (420) is configured to transmit the at least one output file to the at least one remote electronic apparatus (431, 432, 433), preferably the electronic apparatus (420) is coupled to the at least one remote electronic apparatus (431, 432, 433) via a wired or wireless communication interface.

**18.** The electronic whiteboard system as claimed in any one of claims 11 to 17, wherein the electronic apparatus (420) is mounted on the at least one electronic whiteboard (410), a power supply (421) is disposed on the electronic apparatus (420), and the power supply (421) is configured to supply operating power to the electronic apparatus (420) and the at least one electronic whiteboard (410); and/or
the electronic apparatus (320) provides a display panel (SC), and the display panel (SC) is provided to display file contents of the at least one output file; and/or
the electronic whiteboard system further comprises a magnetic substance (521∼2N), wherein the magnetic substance (521∼52N) is disposed on the at least one electronic whiteboard (511∼51N), and the at least one electronic whiteboard (511∼51N) is attached to a base board (501) through the magnetic substance (521∼52N).

**19.** A control method of an electronic whiteboard, comprising:
providing at least one electronic whiteboard (310) to detect a touch operation carried out by a touch medium through a touch detection operation, and generating a touch point reporting signal (TPS) according to the touch operation; and
providing an electronic apparatus (320) to receive the touch point reporting signal (TPS), analyzing the touch point reporting signal (TPS) based on time information to obtain at least one writing track, and generating at least one output file by the electronic apparatus (320) according to the at least one writing track.

**20.** The control method as claimed in claim 19, further comprising: providing the electronic apparatus (320) to analyze the at least one writing track based on the time information, so as to obtain at least one text information.

**21.** The control method as claimed in claim 19 or 20, further comprising:
providing a plurality of function selecting regions (3121-312N) on the at least one electronic whiteboard (310), and generating text feature information corresponding to the at least one text information according to a touched state of each of the plurality of function selecting regions (3121-312N); and
generating the at least one output file by the electronic apparatus (320) according to the at least one text information and the corresponding text feature information.

**22.** The control method as claimed in claim 21, wherein providing the plurality of function selecting regions (3121-312N) on the at least one electronic whiteboard (310) comprises:
providing a file name region (3111) on the at least one electronic whiteboard (310), and detecting the touch operation in the file name region (3111) to generate a file name touch point reporting signal; and
analyzing the file name touch point reporting signal by the electronic apparatus (320) to generate a file name of the at least one output file; or
providing the plurality of function selecting regions (3121-312N) on the at least one electronic whiteboard (310) comprises:
providing at least one text feature selecting region on the at least one electronic whiteboard (310), and detecting the touch operation in the at least one text feature selecting region to generate a feature touch point reporting signal; and
generating the text feature information by the electronic apparatus (320) according to the feature touch point reporting signal.

**23.** The control method as claimed in claim 22, wherein the at least one text feature selecting region comprises at least one of a track color selecting region, a text size selecting region, and a text font selecting region.

**24.** The control method as claimed in claim 21, wherein providing the plurality of function selecting regions (3121-312N) on the at least one electronic whiteboard (310) comprises:
providing a plurality of electronic apparatus control regions on the at least one electronic whiteboard (310), and detecting the touch operation in each of the electronic apparatus control regions to generate a control command; and
receiving the control commands by the electronic apparatus and carrying out a plurality of functions respectively corresponding to the electronic apparatus control regions according to the control commands.
